# EUROPÄISCHE PATENTSCHRIFT

(11) **EP 2 437 618 B1**
(45) Veröffentlichungstag und Bekanntmachung des Hinweises auf die Patenterteilung: **04.11.2015**
(21) Anmeldenummer: 10721030.4
(22) Anmeldetag: 02.06.2010
(51) Int. Cl.: A23J 1/00, A23J 1/14, A23J 3/14, B01J 20/10, A23L 1/015, A23L 1/211

(54) **VERFAHREN ZUM AUFTRENNEN VON PFLANZENPROTEINEN**
METHOD FOR SEPARATING PLANT PROTEINS
PROCÉDÉ DE SÉPARATION DE PROTÉINES VÉGÉTALES

(30) Priorität: 03.06.2009 DE 102009023740
(43) Veröffentlichungstag der Anmeldung: 11.04.2012
(73) Patentinhaber: Süd-Chemie IP GmbH & Co. KG, 80333 München (DE)
(72) Erfinder: RUF, Friedrich, 84184 Ast (DE); SOHLING, Ulrich, 85356 Freising (DE); KASPER, Cornelia, 30159 Hannover (DE); RALLA, Kathrin, 10439 Berlin (DE); SCHEPER, Thomas, 30559 Hannover (DE)
(74) Vertreter: Silber, Anton
(86) Internationale Anmeldenummer: PCT/EP2010/057723
(87) Internationale Veröffentlichungsnummer: WO 2010/139734

(56) Entgegenhaltungen:
- EP-A1- 1 445 261
- WO-A1-2004/103552
- WO-A1-2006/131136
- WO-A1-2008/056977
- DE-A1- 3 633 324
- DE-A1- 10 323 499
- DE-A1-102005 060 392

## Beschreibung

Die vorliegende Erfindung betrifft ein Verfahren zum Auftrennen von Pflanzenproteinen unter Verwendung eines Dreischichtminerals.

Die Nachfrage nach einzelnen, aufgereinigten Pflanzenproteinfraktionen hat sowohl in der Lebensmittel - und Futtermittelindustrie wie auch in der Pharmaindustrie in den letzten Jahren stetig zugenommen. Dabei ist es im Zuge gestiegener Energie- und Rohstoffkosten insbesondere von Interesse, Proteine, die bei der Verarbeitung pflanzlicher Stoffe als Abfallprodukt anfallen, aufzufangen und aufzureinigen.

Speziell Kartoffelfruchtwasser, das beider Stärkeproduktion in großen Mengen als Abfallprodukt anfällt, enthält eine Vielzahl von Proteinen, die sowohl einen qualitativ hohen Nährwert besitzen wie auch aufgrund unterschiedlichster Funktionalitäten für den Einsatz in der Lebensmittelproduktion von großem Interesse- sind.

Die meisten aus dem Stand der Technik bekannten Isolations- und Aufreinigungsprozesse für Proteine schließen neben anderen Separationsmethoden (z. B. Filtration) chromatographische Schritte ein. Chromatographische Verfahren sind generell kostenintensiv, wobei das Sorbens in hohem Maße zu den Kosten beiträgt. Ionentauscher gehören zu den am häufigsten verwendeten stationären Phasen. In Bezug auf die Reinheit des Zielproduktes und für die Verlängerung der Standzeiten des Sorbens, sind Regeneration, Reinigung und Sterilisation im Anschluss an den Trennschritt von hoher Relevanz. Diese erfordern einen zum Teil sehr hohen Verbrauch an Wasser, Puffern oder Lösungsmitteln. Zudem müssen Chromatographiematerialien bei Mehrfachverwendung fortlaufend auf ihre Trennleistung oder mikrobielle Kontaminationen überprüft werden.

Andere aus dem Stand der Technik bekannte Methoden zur Aufreinigung von Protein-haltigen Lösungen erfordern das Denaturieren einer oder mehrerer Proteinfra-ktionen, so dass diese nicht mehr in biologisch aktiver Form vorliegen und für die meisten Anwendungen wertlos sind. Beispielsweise verlieren denaturierte Kartoffelproteine ihre Fähigkeit als Emulgatoren, Schaumbildner, Gelbildner und ihre Wasserbindefunktion sowie ihre Löslichkeit in Wasser und sind damit für sämtliche Anwendungsbereiche in der Lebensmittelindustrie wertlos geworden.

Nachfolgend wird eine Übersicht über die im Stand der Technik bekannten Verfahren zur Aufreinigung von Kartoffelfruchtwasser als Beispiel für eine Protein-haltige Lösung gegeben:

In der EP 0487480 B1 ist ein Verfahren zur Aufreinigung von Kartoffelfruchtwasser beschrieben, bei dem ein Teil der Proteine durch Erhitzen denaturiert wird und in der verbleibenden Lösung der weiterhin aktive Teil der Proteine durch Ultrafiltration vom Wasser getrennt wird. Auch hier geht ein Großteil der wertvollen Kartoffelproteine (und anderer Inhaltsstoffe) durch die Hitzebehandlung verloren. Die US 2003/0092151 A1 offenbart ein Verfahren, bei dem Proteaseinhibitoren aufgereinigt werden, indem zuerst eine Vielzahl unterschiedlicher Proteinfraktionen durch alkoholfreie Extraktion aus geeignetem Pflanzenmaterial herausgelöst wird und die unerwünschten Proteine (wie beispielsweise Carboxypeptidaseinhibitoren) durch Hitze denaturiert werden und das Denaturat durch Zentrifugation abgetrennt wird.

Auch in der DE 2814922 und der US 6,686,456 B2 wird Kartoffelfruchtwasser bzw. Proteinextrakt aus Pflanzenmaterial lediglich durch Hitzekoagulation und Zentrifugation aufgereinigt.

Weiterhin sind Verfahren bekannt, bei denen die Aufreinigung nicht durch Hitze- sondern durch enzymatische Koagulation durchgeführt wird (Bihac, J.R. A modified method to purify patatin from potato tubers; J. Agric. Food. Chem., 1991, 39, 1411-1415).

In der WO 97/42834 ist ein Verfahren zur Aufreinigung von Kartoffelproteinen beschrieben, in dem das nichtdenaturierte Kartoffelprotein aufkonzentriert und optional getrocknet wird, wobei die Trocknungstemperaturen 40 °C nicht übersteigt. Das Aufkonzentrieren kann dabei durch Filtration (bevorzugt Ultrafiltration), Verdampfung, Adsorption-Elution oder einer Mischung dieser Methoden durchgeführt werden. Der Prozess beinhaltet auch optional eine Vorbehandlung des nicht-denaturierten Proteins durch eine Flockung, welche mit Calciumphosphat durchgeführt wird. In weiteren Schritten des Verfahrens wird das Protein durch Ultrafiltration aufgereinigt.

Ein Verfahren, bei dem Kartoffelproteine durch "expanded bed adsorption" aufgereinigt werden wird von Straetkvern, K.O. et al. beschrieben (Expanded bed adsorption for recovery of patatin from crude potato juice; Bioseparation 7: 333-345, 1999). Ein ähnliches Verfahren wird in der EP 1 920 662 A1 wie auch in der WO 2008/ 069650 beschrieben, wobei hier der Schritt der "expanded bed adsorption" mit einer vorausgehenden Flockung des Kartoffelfruchtwassers kombiniert ist.

In der DE 10 2005 060392 A1 ist ein Verfahren zur Abtrennung von Proteinen aus flüssigen Medien beschrieben, wobei ein Tonmaterial verwendet wird.

In der WO 2008/056977 A1 ist ein Verfahren zur Abtrennung von Proteinen und auch Glykoalkaloiden aus beispielsweise Kartoffelfruchtwasser beschrieben, wobei ein Schichtsilikat wie ein smektitartiges Tonmineral, wie Montmorillonit, Bentonit, Saponit, Hektorit oder auch Vermikulit genannt wird

Den aus dem Stand der Technik bekannten Verfahren ist gemeinsam, dass sie entweder den Einsatz teurer Materialien erfordern, wie es beispielsweise bei den chromatografischen Methoden der Fall ist oder die Denaturierung mindestens einer Proteinfraktion zur Folge haben, sodass diese Proteine für weitere Anwendungsmöglichkeiten wertlos geworden sind. Zudem erfordern sämtliche aus dem Stand der Technik bekannte Methoden eine Vielzahl von Vor- und/oder Nachbehandlungsschritten, wie etwa eine Vorextraktion der Proteine durch nicht-alkoholische Lösungsmittel und ein nachträgliches Abzentrifugieren des Extrakts oder Denaturats.

Es besteht daher ein Bedarf für ein Verfahren, das die gezielte Aufreinigung einzelner Proteinfräktionen pflanzlichen Ursprungs ermöglicht, bei dem zum Einen sämtliche Proteine ihre aktive Form und damit ihre möglichen Funktionen behalten, aber das zum Anderen auch kostensparend und wenig zeitaufwendig ist, sodass es auch für den großindustriellen Einsatz geeignet ist.

Die vorliegende Erfindung stellt nun ein Verfahren zum Auftrennen von Pflanzenproteinen zur Verfügung, umfassend den Schritt
a) In-Kontakt-Bringen einer Proteinlösung mit einem Dreischichtmineral, ausgewählt aus der Gruppe bestehend aus natürlichen oder künstlich hergestellten Dreischichtmineralen, die sauer oder alkalisch vorbehandelt sein können und/oder einen Anteil an Kieselgel enthalten, wobei das Dreischichtmineral eine Kationenaustauschkapazität von mindestens 50 meq/ 100g Dreischichtmineral besitzt.

Es wurde dabei überraschend gefunden, dass Dreischichtminerale, die eine Kationenaustauschkapazität von mindestens 50 meq/ 100g Dreischichtmineral besitzen, für die Auftrennung von Proteinfraktionen besonders gut geeignet sind. Die Dreischichtminerale, die in dem erfindungsgemäßen Verfahren eingesetzt werden, können vor dem Einsatz in dem erfindungsgemäßen Verfahren sauer oder alkalisch vorbehandelt werden und/oder einen Anteil an Kieselgel enthalten.

Das erfindungsgemäße Verfahren besitzt gegenüber den aus dem Stand der Technik bekannten Verfahren den Vorteil, dass sämtliche der aufgetrennten Proteine ihre Aktivität behalten und für jeden denkbaren Anwendungsbereich weiterverwendet werden können. Zudem sind Dreischichtminerale in großen Mengen kostengünstig zu erwerben. Ein weiterer Vorteil des erfindungsgemäßen Verfahrens ist, dass es einfach und ohne großen Zeitaufwand durchgeführt werden kann, was ebenfalls zur Kostenersparnis beiträgt. Zudem kann das erfindungsgemäße Verfahren sowohl diskontinuierlich als Batchverfahren, als auch kontinuierlich über eine Säulenpackung des entsprechenden Dreischichtminerals durchgeführt werden und ermöglicht somit eine sehr flexible Einstellung auf die jeweiligen Produktionsgegebenheiten.

Im Rahmen der vorliegenden Erfindung wird unter dem Begriff "Pflanzenprotein" jedes Protein verstanden, das pflanzlichen Ursprungs ist, d.h. von Pflanzen extrahiert werden kann und/oder von Pflanzen gebildet wird. Pflanzen (*Plantae*) bilden ein eigenes Reich innerhalb der Domäne der Lebewesen mit Zellkern und Zellmembran (Eukaryoten)und umfassen im Rahmen der vorliegenden Erfindung auch Moose, Gefäßpflanzen sowie Grün- und Rotalgen. Im Rahmen der vorliegenden Erfindung bevorzugte Pflanzen sind Stärke-haltige Pflanzen und/oder Knollenfrüchte, besonders bevorzugt sind die Pflanzen gemäß der vorliegenden Erfindung ausgewählt aus der Gruppe bestehend aus Mais, Reis, Gerste, Weizen, Roggen, Hafer, Hirse, Soja, Tapioka, Topinambur, Kartoffeln und Süßkartoffeln, Cassava, Maniok, Tannia, Canna, Yamswurzel, Pfeilwurzel, Wasserbrotwurzel und Emmer, wobei Kartoffeln besonders bevorzugt sind.

Unter dem Begriff "Protein" wird im Rahmen der vorliegenden Erfindung jedes Molekül verstanden, das mindestens zwei Aminosäuren umfasst. Damit sind im Rahmen der vorliegenden Erfindung auch Peptide, Oligopeptide und Polypeptide vom Begriff "Protein" umfasst.

Unter dem Begriff "Dreischichtmineral" wird im Rahmen der vorliegenden Erfindung ein schichtartig aufgebautes Aluminosilikat oder Magnesiumsilikat verstanden. Diese sind aus Tetraedern und Oktaedern aufgebaut. Si-Tetraeder bilden im Zusammenschluss die tetraedrischen Schichten, wobei die Möglichkeit einer Substitution von Si durch z.B. Al oder Fe besteht. Die Tetraeder sind durch drei basale Sauerstoffatome miteinander verbunden. Ein viertes Sauerstoffatom verknüpft die tetraedrischen Schichten mit der Oktaederschicht. Eine laterale Bindung der Oktaeder miteinander entsteht durch das gemeinsame Belegen der Kanten. Zu den Dreischichtmineralen gehören Talk-Pyrophyllite, Glimmererden, Vermikulite und Smektite. Diese Gruppen werden abhängig von ihrer Schichtladung, welche durch isomorphe Substitutionen entsteht, voneinander unterschieden. Beispielsweise werden Vermikulite von Smektiten durch eine höhere Schichtladung resultierend aus einem höheren Anteil an Substitutionen in den Tetraederschichten abgegrenzt, wodurch Vermikulite z.B. ein geringeres Quellvermögen aufweisen, sowie durch eine bestimmte Anordnung der Substitutionen bei den Vermikuliten, welche im Gegensatz zu den Smektiten zufällig verteilt vorkommen.

Im Rahmen der vorliegenden Erfindung bevorzugte Dreischichtminerale weisen einen SiO₂ Gehalt von mindestens 50 Gew.-%, bevorzugter mindestens 55 Gew.-%, insbesondere bevorzugt mindestens 60 Gew.-%, desweiteren bevorzugt mindestens 65 Gew.-%, noch bevorzugter mindestens 70 Gew.-% auf. Es kann ebenfalls bevorzugt sein, dass die Dreischichtminerale im Rahmen der vorliegenden Erfindung einen Fe₂O₃ Gehalt von 2,5 bis 5,5 Gew.-%, bevorzugt von 2,7 bis 5,2 Gew.-%, bevorzugter von 2,8 bis 4,9 Gew.-% aufweisen. Es kann weiter bevorzugt sein, dass die Dreischichtminerale im Rahmen der vorliegenden Erfindung einen Al₂O₃ Gehalt von 9,0 bis 20,0 Gew.-%, bevorzugt von 9,4 bis 18,5 Gew.-%, bevorzugter von 9,8 bis 15,5 Gew.-% aufweisen.

Im Rahmen der vorliegenden Erfindung ist das Dreischichtmineral bevorzugt ausgewählt aus der Gruppe bestehend aus smektitischen und nicht-smektitischen Schichtsilikaten sowie Mischungen davon.

Smektite weisen eine Schichtladung zwischen 0,2-0,6 pro Formeleinheit auf. In den Oktaederschichten sind in erster Linie trivalente Kationen (dioktaedrische Smektite) oder divalente Kationen (trioktaedrische Smektite) eingebaut. Ausgehend von den beiden ungeladenen 2:1-Schichtsilikaten Talk und Pyrophillit werden die Strukturen der der einzelnen smektitischen Tonminerale abgeleitet. Ausgehend von der Pyrophyllitstruktur entsteht durch eine partielle Substitution der Al³⁺-Ionen der Oktaederschicht Montmorillonit, während Beidellit aus der Substitution-von Si⁴⁺ durch Al³⁺ in der Tetraederschicht hervorgeht. Analog dazu ist eine Ableitung der trioktaedrischen Smektite von Talk möglich, indem entweder Si⁴⁺ in der Tetraederschicht durch dreiwertige Ionen wie Al³⁺ (z. B. bei Saponiten) oder Mg²⁺ in der Oktaederschicht durch Li⁺ (wie bei Hektoriten) ersetzt wird. In allen Fällen wird abhängig vom Substitutionsgrad mit niedriger geladenen Ionen eine permanente negative Schichtladung erzeugt. Die negative Ladung wird durch den Einbau von Zwischenschichtkationen ausbalanciert. Ein Austausch dieser Kationen ist möglich.

Smektite enthalten Wasser in unterschiedlicher Form: Es kann in Mikroporen kapillar zurückgehalten werden oder im Schichtzwischenraum mit der internen oder externen Oberfläche assoziiert vorliegen.

Gemäß'einer besonders bevorzugten Ausführungsform sind die smektitischen Schichtsilikate ausgewählt aus der Gruppe bestehend aus Bentoniten, Beideliten, Saponiten, Montmorilloniten, Hektoriten und Stevensiten und die nicht-smektitischen Schichtsilikate aus der Gruppe bestehend aus Vermiculiten.

Die in dem erfindungsgemäßen Verfahren eingesetzten Dreischichtminerale können sauer oder basisch vorbehandelt sein. Unter einer sauren bzw. basischen Vorbehandlung wird im Rahmen der vorliegenden Erfindung die Behandlung des erfindungsgemäßen Dreischichtminerals bevorzugt mit einer organischen Säure, besonders bevorzugt ausgewählt aus der Gruppe bestehend aus Zitronensäure, Weinsäure, Oxalsäure, Äpfelsäure und Mischungen davon. Die Behandlung kann-dabei auf jede Art erfolgen, die dem Fachmann als für den erfindungsgemäßen Zweck geeignet bekannt ist und erfolgt bevorzugt durch gleichzeitiges Vermahlen des Dreischichtminerals mit der Säure oder Besprühen oder Immersion des Dreischichtminerals mit/in der Säure.

Die in dem erfindungsgemäßen Verfahren eingesetzten Dreischichtminerale können zudem (neben oder auch ohne eine Vorbehandlung) einen Anteil an Kieselgel enthalten.. Der Anteil an Kieselgel beträgt vorzugsweise 0,01 bis 80 Gew.-% (bezogen auf' das Gewicht des Dreischichtminerals), bevorzugt 0,1 bis 65 Gew.-%, weiter bevorzugt 1 bis 50 Gew.-%. Ein Gehalt an Kieselgel führt zu Dreischichtmineralen, die ein stark vermindertes oder auch kein Quellverhalten aufweisen, so dass speziell diese Dreischichtminerale vorteilhaft in Säulen oder Filterschichten eingesetzt werden können. Insbesondere sind Kieselgel-enthaltende Dreischichtminerale auch für den Einsatz in Anschwemmfiltrationen geeignet und lassen sich leicht sedimentieren.

Unter dem Begriff "Kationenaustauschkapazität" wird im Rahmen der vorliegenden Erfindung die Summer aller austauschbaren Kationen verstanden. Die Kationenaustauschkapazität umfasst dabei beispielsweise die Summe aller austauschbaren zwei- und einwertigen Kationen wie Calcium, Magnesium, Natrium, Lithium und Kaliumionen Zur Bestimmung der Kationenaustauscherkapazität wird das Dreischichtmineral mit einer Ammoniumchloridlösung behandelt. Dabei werden wegen der hohen Affinität der Ammoniumionen zum Dreischichtmineral praktisch alle austauschbaren Kationen durch Ammoniumionen ausgetauscht. Nach Abtrennen und Waschen wird der Stickstoffgehalt des Dreischichtminerals bestimmt und daraus der Gehalt an Ammoniumionen sowie die Kationenaustauschkapazität errechnet.

Die Kationenaustauschkapazität wird im Rahmen der vorliegenden Erfindung wie nachfolgend im Methodenteil beschrieben, bestimmt.

Die Kationenaustauschkapazität des Dreischichtminerals liegt dabei bei mindestens 50 meq / 100g Dreischichtmineral, bevorzugt bei mindestens 55 meq/ 100g, weiter bevorzugt bei mindestens 60 meq/ 100g, bevorzugter bei mindestens 65 meq/ 100g, ebenfalls bevorzugt bei mindestens 7.0 meq/ 100g und am meisten bevorzugt be.i mindestens 80 meq/ 100g.

Gemäß einer weiteren Ausführungsform-der vorliegenden Erfindung umfasst das Dreischichtmineral zudem ein oder mehrere amorphe Phase(n). Der Gehalt an Kieselgel sollte insgesamt einen Anteil von 80 Gew.-% (bezogen auf das Gewicht des Dreischichtminerals), bevorzugt 65 Gew.-%, am meisten bevorzugt 50 Gew.-% nicht übersteigen, wobei der Anteil an Kieselgel innerhalb der bevorzugten Grenzen frei gewählt werden kann.

Neben dem Dreischichtmineral und den amorphen Phasen können die erfindungsgemäßen Tone auch ein oder mehrere Nebenmineralien enthalten, ausgewählt aus der Gruppe bestehend aus Quarz, Cristobalit, Feldspat, Calcit, Dolomit und deren Mischungen. Der Anteil an Nebenmineralien sollte am gesamten Material kleiner 30 Gew.-%, bevorzugt kleiner 20 Gew.-%, ganz besonders bevorzugt kleiner 10 Gew.-% betragen. Dabei ist es insbesondere bevorzugt, dass der Anteil an Quarz und Christobalit in dem Dreischichtmineral kleiner als 10 Gew.-%, bevorzugt kleiner 7 Gew.-%, bevorzugter kleiner 5 Gew.-% und am meisten bevorzugt kleiner 2 Gew.-% ist.

Gemäß einer weiteren erfindungsgemäßen Ausführungsform besitzt das Dreischichtmineral eine mittlere Teilchengröße von 1 µm bis 1,5 mm, bevorzugt von 5 µm bis 0,5 mm, besonders bevorzugt von 0,1 pm bis 1 mm. Die erfindungsgemäß bevorzugten Teilchengrößen ermöglichen es einerseits eine noch akzeptable Oberfläche der Adsorbentien zur Verfügung zu stellen, andererseits die Druckverluste zu minimieren. Die Teilchengröße kann man dabei beispielsweise durch eine Siebanalyse charakterisieren. Hierbei wird eine Probe über Siebe mit unterschiedlichen Maschenweiten abgesiebt und der Rückstand auf dem Sieb in Gewichtsanteilen bestimmt. Dies gilt insbesondere bei technischen Anwendungen als Maß für die Feinheit der Pulver. Zusätzlich können noch Lichtstreuungsuntersuchungen in Luft durchgeführt werden, um die mittlere Teilchengroße zu bestimmen.

Die Wahl der Teilchengröße hängt insbesondere vom durchgeführten Prozess ab. Wird ein Batch-Prozess eingesetzt, um das Solanin und minore Kartoffelproteine abzutrennen, so werden relativ feine Teilchengrößen bevorzugt. Diese sollten dann bevorzugt kleiner als 100 µm sein. Sollen die minoren Proteine und/oder Glykoalkaloide über eine Kieselgurfiltration abgetrennt werden, verwendet man üblicherweise auch Teilchengrößen zwischen 20 µm und 100 µm. Dahingegen müssten beim Einsatz der erfindungsgemäßen Materialien für den vorher angeführten Separationsprozess in technischen Säulen größere Teilchengrößen eingesetzt werden, um Druckverluste zu minimieren. Hierzu werden üblicherweise Teilchengrößen von 0,3 mm bis 1 mm eingesetzt. Dies erfordert dann, vor dem Trennprozess die eingesetzten Tone oder Bleicherden, die in der Regel als Pulver mit mittleren Teilchengrößen zwischen 1 µm und 100 µm vorliegen, über einen Granulationsprozess in größere Partikel zu überführen.

Um eine gewünschte, bevorzugte Teilchengröße einzustellen kann jedes Verfahren angewendet werden, das dem Fachmann als für den erfindungsgemäßen Zweck geeignet bekannt ist, bevorzugt wird die Teilchengröße jedoch durch Granulationstechnik, wie beispielsweise eine Kompaktierung oder eine Granulation mit einem wässrigen Binder in einer mechanisch erzeugten Wirbelschicht eingestellt. Die Teilchen können überdies anschließend durch eine Hochtemperaturbehandlung stabilisiert werden. Im dem Fall, dass es sich bei dem Dreischichtmineral um eine Mischphase aus einem (oder mehreren) smektitischen Ton (en) und Kieselgel handelt, ist es bevorzugt das Dreischichtmineral (Mischphase) grob vorzubrechen, anschließend eine nasse Ausreinigung durchzuführen und die dabei verbleibenden groben Partikel weiter zu zerkleinern auch hier ist eine Stabilisierung durch Trocknen oder eine Hochtemperaturanwendung möglich. Eine Trocknung oder Hochtemperaturanwendung besitzt den Vorteil, dass Teilchen mit hoher Porosität aber auch geeigneter mechanischer Stabilität erhalten werden.

Gemäß einer weiteren erfindungsgemäßen Ausführungsform besitzt die Proteinlösung bevorzugt einen pH-Wert von 5,0 bis 9,0 bevorzugter von 5,2 bis 8,8, weiter bevorzugt von 5,5 bis 8,5, noch bevorzugter von 5,8 bis 8,2, besonders bevorzugt von 6,0 bis 8,0 und am meisten bevorzugt von 6,2 bis 7,5.
Gemäß einer weiteren Ausführungsform der vorliegenden Erfindung handelt es sich bei der Proteinlösung bevorzugt um Pflanzenfruchtwasser. Unter dem Begriff "Pflanzenfruchtwasser" wird dabei jede Lösung, die Pflanzenmaterial enthält, verstanden. Bevorzugt wird die Lösung durch Pressen von ganzen Pflanzen oder Pflanzenteilen erhalten. Die Lösung kann jedoch auch durch Extraktion von Pflanzen oder Pflanzenteilen erhalten werden, wobei als Lösungsmittel bevorzugt Wasser eingesetzt wird. Es kann im Rahmen der vorliegenden Erfindung jedoch jedes Lösungsmittel eingesetzt werden, das dem Fachmann als für den erfindungsgemäßen Zweck geeignet bekannt ist. Desweiteren kann das Pflanzenfruchtwasser durch jedes Verfahren hergestellt werden, das dem Fachmann als für den erfindungsgemäßen Zweck geeignet bekannt ist.

Gemäß einem besonders bevorzugten erfindungsgemäßen Verfahren handelt es sich bei dem Pflanzenfruchtwasser um Kartoffelfruchtwasser.

Kartoffelfruchtwasser fällt bei der industriellen Stärkegewinnung als flüssiges Nebenprodukt an, welches etwa 1,8% Protein enthält.

Die Proteine im Kartoffelfruchtwasser lassen sich in drei große Gruppen unterteilen. Zur ersten Gruppe gehören die Isoformen des Patatins. Bei den Patatinen handelt es sich um eine Klasse von etwa 15 verschiedenen, immunologisch identischen Glykoproteinisoformen mit einer molekularen Masse von ca. 40-43 kDa und isoelektrischen Punkten zwischen pH 4,6 und 5,2. Die in den Vakuolen der parenchymatischen Zellen lokalisierten Patatine liegen in nativer Form als Dimere oder Oligomere vor. Patatin stellt etwa 40-60 % des löslichen Proteins in Kartoffelknollen dar und wird, aufgrund seiner hohen Akkumulation, als Speicherprotein angesehen. Im Gegensatz zu anderen Speicherproteinen weist es eine Enzymaktivität (Lipid-Acylhydrolase- sowie Acyltransferase-Aktivität) au. Patatin zeigt eine weite Substratspezifität und ist hydrolytisch aktiv gegenüber Phospholipiden, neutralen Lipiden (Mono- und Diacylglycerolen), Glykolipiden und Estern von langkettigen Fettsäuren. Eine besonders hohe Enzymaktivität ist bei Kettenlängen von C8/C10 und C14/C16 zu verzeichnen. Patatin als Monomer besteht aus 366 Aminosäuren und ist an Asparagin 60 und

Asparagin 90 *N*-glykosiliert, wobei die Glykosilierungen etwa 4 % der Molekülmasse bilden. Auf Grund einer hohen ernährungsphysiologischen Qualität und einer ausgewogenen Aminosäurezusammensetzung wäre Patatin, in seiner funktionellen Form isoliert, eine interessante Proteinkomponente für die Lebensmittelindustrie.

Die zweite Gruppe von Kartoffelprotein besteht aus sieben unterschiedlichen Klassen von Protease-Inhibitoren, welche zusammen etwa 20-30 % des Gesamtproteins repräsentieren (minores Kartoffelprotein). Bei den Protease-Inhibitoren handelt es sich, im Gegensatz zu den Patatinen, um eine heterogene Gruppe von Proteinen, die sich sowohl in ihrer Aminosäuresequenz, ihrem Molekulargewicht als auch in ihrer Aktivität unterscheiden.

Die Protease-Inhibitoren werden allgemein als Speicherproteine angesehen (Stickstoffquelle) und sind an der verletzungsinduzierten Abwehr von Herbivoren und Pathogenen beteiligt. In den letzten Jahren ist das Interesse an den Protease-Inhibitoren der Kartoffel aufgrund ihrer antikarzinogenen Aktivität gestiegen. Die antikarzinogene Wirkung konnte sowohl *in vitro* als auch *in vivo* festgestellt werden und zeigt sich z. B. durch eine proliferationsinhibierende Aktivität von Serin-Protease-Inhibitoren gegenüber Tumorzellen. Die höchste antikarzinogene Wirkung geht von Protease-Inhibitoren mit Chymotrypsin inhibierender Aktivität aus.

Basierend auf einem sättigenden Effekt können sie im Bereich Functional Food eingesetzt werden. Die Sättigungswirkung beruht auf der Freigabe des Darmpeptids Cholecystokinin durch die Inhibierung von Trypsin.

Die dritte Klasse von Kartoffelproteinen bilden die Polyphenoloxidasen (ca. 20-30 % vom Gesamtprotein), welche die Oxidation von Polyphenolen zu ortho-Chinonen katalysieren. Polyphenoloxidasen sind dadurch ein entscheidender Faktor bei Bräunungsreaktionen in Früchten und Gemüse. Zwei der wichtigsten Polyphenoloxidasen sind Tyrosinase (Umsetzung von Monophenolen und ortho-Diphenolen) und Laccase (Oxidation von ortho- und para-Diphenolen, sowie von substituierten Polyphenolen und aromatischen Aminen).

Neben den einzelnen Proteinfraktionen wie vorstehend beschrieben, enthält Kartoffelfruchtwasser auch noch eine Reihe weiterer Bestandteile, unter denen den Glykoalkaloiden eine besondere Bedeutung zukommt.

Glykoalkaloide (in erster Linie ca. 60 % α-Chaconin und ca. 40 % α-Solanin) kommen als Sekundärmetabolite in allen Teilen der Kartoffelpflanze vor. Besonders hohe Glykoalkaloidkonzentrationen treten in der Schale der Knollen, in Blüten und Sprossen auf.

Im Stand der Technik sind seit langem mannigfaltige negative Auswirkungen von Kartoffelglykoalkaloiden auf typische Prozessschritte in der Nahrungsmittelverarbeitung bekannt. Mehrfach beschrieben ist zudem die hohe Temperaturstabilität der Glykoalkaloide, sodass diese auch bei höheren Temperaturen nicht automatisch entfernt werden. Auch führt das Backen, Frittieren oder die Behandlung mit Mikrowellen, auch bei einer Erhitzung auf über 170 °C nur zu einer geringen Reduktion des Glykoalkaloidgehalts. Aufgrund der toxischen Eigenschaften sowie des bitteren Geschmacks ist es von besonderer Wichtigkeit die Kartoffelglykoalkaloide aus dem Kartoffelfruchtwasser bzw. den aufgereinigten Proteinen zu entfernen, um das isolierte Protein beispielsweise in der Lebensmittel- oder Futtermittelindustrie weiterverwenden zu können. Daneben sind viele Glykoalkaloide stark hydrophob und daher schwer durch gewöhnliche Extraktionsmethoden zu extrahieren.

Die Glykoalkaloide der Kartoffel wirken aufgrund ihrer inhibierenden Wirkung auf Acetyl- und Butylcholinesterasen toxisch auf das zentrale Nervensystem (Hemmung der Hydrolyse des Neurotransmitters Acetylcholin) und schädigen Zellmembranen im Verdauungssystem und in anderen Organsystemen. Des Weiteren sind Interferenzen mit dem Sterol- bzw. Steroidmetabolismus wahrscheinlich. Diese Effekte können zu Magen-Darm-Beschwerden, neurologischen Funktionsstörungen, Delirium, Koma oder zum Tod führen. Erste Auswirkungen treten bei etwa 1-3 mg/kg Körpergewicht auf. Konzentrationen ab etwa 3-6 mg/kg Körpergewicht können letal wirken.

Neben diesen, vor allem die Lebensmittelproduktion betreffenden, nachteiligen Eigenschaften besitzen Glykoalkaloide jedoch auch positive pharmazeutische Wirkungen. In Studien, die sich mit Auswirkungen von Glykolalkaloiden verschiedener Nachtschattengewächse auf die Proliferation von Krebszellen befassen, wurde eine proliferationsinhibierende Wirkung nachgewiesen. Diese beruht auf der Zerstörung von Zellmembranen durch Veränderung des Membranpotentials, sowie auf Brüchen in der Membran durch Einfügen der Glykoalkaloide in die Membranen. Zum Anderen kann eine Induktion von Apoptose erfolgen.

Das Aglykon von α-Solanin und α-Chaconin (Solanidin) wird darüber hinaus als Ausgangsverbindung zur Synthese von Dehydropregnenolon (DPA) diskutiert. Basierend auf DPA werden unterschiedliche Steroidhormone wie z. B. Progesteron, Östrogene oder Kortison hergestellt.

Aufgrund ihrer biologischen Aktivität sind α-Chaconin und α-Solanin prinzipiell für pharmazeutische Anwendungen äußerst attraktiv, so dass eine großindustriell anwendbare Aufreinigung des Kartoffelfruchtwassers auch in dieser Hinsicht interessant ist.

Wird das erfindungsgemäße Verfahren beispielsweise auf Kartoffelfruchtwasser angewendet, so werden in Schritt a) minore Kartoffelproteine und Glykoalkaloide gleichzeitig von den Patatinen abgetrennt, wobei die Patatine in Lösung verbleiben und die restlichen Proteine (darunter wesentlich die minoren Proteine) und die Glykoalkaloide an dem Dreischichtmineral adsorbiert werden. Da im Rahmen des erfindungsgemäßen Verfahrens sämtliche Proteinfraktionen ihre Aktivität(en) behalten, sind sie für alle möglichen späteren Anwendungsbereiche einsetzbar.

Gemäß einer weiteren bevorzugten Ausführungsform umfasst das erfindungsgemäße Verfahren desweiteren die Schritte des
b) Trennens der gemäß Schritt a) In-Kontakt-gebrachten Proteinlösung und des Dreischichtminerals;
c) In-Kontakt-Bringen des Dreischichtminerals von Schritt b) mit einer Pufferlösung oder Hochsalzpufferlösung.

Die Patatine können durch im Stand der Technik bekannte Methoden aus der Lösung extrahiert und weiter verwertet werden. Die an dem Dreischichtmineral adsorbierten Proteine und Glykoalkaloide können durch gezielte Proteinshifts, beispielsweise durch die Anwendung von Puffer- oder Hochsalzpufferlösungen, von dem Adsorbens (Dreischichtmineral) desorbiert werden. Dabei ist es vorteilhaft, wenn für die Desorption der einzelnen Fraktionen jeweils ein Puffer/Hochsalzpuffer mit einem pH-Wert eingesetzt wird, der bevorzugt 1 Einheit, bevorzugter 0,8 Einheiten, weiter bevorzugt 0,6 Einheiten, besonders bevorzugt 0,5 Einheiten und ebenfalls besonders bevorzugt 0,4 Einheiten über dem isoelektrischen Punkt des zu desorbierenden Proteins (oder Glykoalkaloids bzw. der zu desorbierenden Verbindung) liegt.

Die Ablösung der einzelnen adsorbierten Verbindungen von dem Dreischichtmineral kann jedoch grundsätzlich auf jede Weise erfolgen, die dem Fachmann als für den erfindungsgemäßen Zweck geeignet bekannt ist.

Es ist ein besonderer Vorteil des erfindungsgemäßen Verfahrens, dass die eingesetzten Dreischichtminerale nach dem Auftrennungsvorgang regeneriert und wiederverwendet werden können. Dabei können beispielsweise die Protease-Inhibitoren durch das Ablösen vom Adsorbens gewonnen werden.

Eine Regenerierung kann beispielsweise durch das In-Kontakt-Bringen des Dreischichtminerals mit einem Hochsalzpuffer (1M oder 2 M NaCl) oder einem alkalischen Puffer wie erfolgen. Bevorzugt sind hier alkalische Puffer, insbesondere solche mit pH Werten von 8- 14, bevorzugter von 9 bis 13 und am bevorzugtesten von 10 bis 12. Bevorzugte Puffer sind hierbei 100 mM CAPS (pH 11) sowie 100 mM Phosphat (pH 12). Die Möglichkeit der Regenerierung ist besonders vorteilhaft, wenn das Dreischichtmineral in dem erfindungsgemäßen Verfahren in einer Säulenpackung eingesetzt wird.

### Methodenteil

Die physikalischen Eigenschaften des Adsorbens wurden mit den folgenden Verfahren bestimmt

### BET-Oberfläche/Porenvolumen nach BJH und BET:

Die Oberfläche und das Porenvolumen wurden mit einem vollautomatischen Stickstoffporosimeter der Firma Micormeritics Typ ASAP 2010 bestimmt.

Die Probe wird im Hochvakuum auf die Temperatur von flüssigem Stickstoff abgekühlt. Anschließend wird kontinuierlich Stickstoff in die Probenkammern dosiert. Durch die Erfassung der adsorbierten Gasmenge als Funktion des Druckes wird bei konstanter Temperatur eine Adsorptionsisotherme ermittelt. In einem Druckausgleich wird das Analysengas schrittweise entfernt und eine Desorptionsisotherme aufgenommen.

Zur Ermittlung der spezifischen Oberfläche und der Porosität nach der BIT-Theorie werden die Daten gemäß DIN 66131 ausgewertet.

Das Porenvolumen wird ferner aus den Messdaten unter Anwendung der BJH-Methode ermittelt (I.P. Barret, L.G. Joiner, P.P. Haienda, J.Am.Chem.Soc. 73, 1991, 373). Bei diesem Verfahren werden auch Effekte der Kapillarkondensation berücksichtigt. Porenvolumina bestimmter Volumengrößenbereiche werden durch Aufsummieren inkrementeller Porenvolumina bestimmt, die aus der Auswertung der Adsorptionsisotherme nach BJH erhalten werden. Das Gesamtporenvolumen nach BJH-Methode bezieht sich auf Poren mit einem Durchmesser mit 1,7 bis 300 nm.

### Wassergehalt:

Der Wassergehalt der Produkte bei 105 °C wird unter Verwendung der Methode DIN/ISO-787/2 ermittelt.

### Silikatanalyse:

### (a) Probenaufschluss

Diese Analyse beruht auf dem Totalaufschluss des Rohtons bzw. des entsprechenden Produktes. Nach dem Auflösen der Feststoffe werden die Einzelkomponenten mit herkömmlichen spezifischen Analysemethoden, wie z.B. ICB, analysiert und quantifiziert.

Für den Probenaufschluss werden ca. 10 g der zu untersuchenden Probe fein vermahlen und 2 - 3 Stunden lang im Trockenschrank bei 105 °C bis zur Gewichtskonstanz getrocknet. Ca. 1,4 g der getrockneten Probe werden in einen Platintiegel gegeben und die Probeneinwaage bis zu einer Genauigkeit von 0,001 g ermittelt. Danach wird die Probe im Platintiegel mit der 4 bis 6-fachen Gewichtsmenge einer Mischung aus Natriumcarbonat und Kaliumcarbonat (1 : 1) vermischt. Die Mischung wird mit dem Platintiegel in einen Simon-Müller-Ofen gestellt und 2 - 3 Stunden bei 800 - 850 °C geschmolzen. Der Platintiegel mit der Schmelze wird mit einer Platinzange aus dem Ofen genommen und zum Abkühlen Stehen gelassen. Die abgekühlte Schmelze wird mit wenig destilliertem Wasser in eine Kasserolle gespült und vorsichtig mit konzentrierter Salzsäure versetzt. Nach Beendigung der Gasentwicklung wird die Lösung bis zur Trockene eingedampft. Der Rückstand wird erneut in 20 ml konz. Salzsäure aufgenommen und erneut zur Trockene eingedampft. Das Eindampfen mit Salzsäure wird noch einmal wiederholt. Der Rückstand wird mit ca. 5 - 10 ml Salzsäure (12 %) angefeuchtet, mit ca. 100 ml dest. Wasser versetzt und erwärmt. Unlösliche SiO₂ wird abfiltriert, der Rückstand drei Mal mit heißer Salzsäure (12 %) gewaschen und dann mit heißem Wasser (dest.) gewaschen, bis das Filtratwasser chloridfrei ist.

### (b) Silikatbestimmung

Das SiO₂ wird mit dem Filter verascht und ausgewogen.

### (c) Bestimmung von Aluminum, Eisen, Calcium und Magnesium

Das bei der Silikatbestimmung gesammelte Filtrat wird in einen 500 ml Messkolben überführt und bis zur Eichmarke mit destilliertem Wasser ergänzt. Aus dieser Lösung werden dann mittels FAAS Aluminium-, Eisen-, Calcium- und Magnesiumbestimmung durchgeführt.

### (d) Bestimmung von Kalium, Natrium und Lithium

500 mg der getrockneten Probe werden auf 0,1 mg genau in einer Platinschale eingewogen. Danach wird die Probe mit ca. 1 - 2 ml dest. Wasser durchfeuchtet und 4 Tropfen konzentrierte Schwefelsäure zugegeben. Danach wird dreimal mit ca. 10 - 20 ml konz. HF bis zur Trockene im Sandbad eingedampft. Zuletzt wird mit H₂SO₄ befeuchtet und auf der Ofenplatte bis zur Trockene abgeraucht. Nach kurzem Glühen der Platinschale werden ca. 40 ml dest. Wasser und 5 ml Salzsäure (18 %) zugegeben und die Mischung aufgekocht. Die erhaltene Lösung wird in einen 250 ml Messkolben überführt und bis zur Eichmarke mit dest. Wasser ergänzt. Aus dieser Lösung wird mittels EAS der Natrium-, Kalium- und Lithiumgehalt ermittelt.

### Glühverlust:

In einem geglühten gewogenen Porzellantiegel mit Deckel wird ca. 1 g getrocknete Probe auf 0,1 mg genau eingewogen und 2 h lang bei 1000 °C im Muffelofen geglüht. Danach -wird- der Tiegel im Exsikkator abgekühlt und ausgewogen.

### Ionenaustauschkapazität:

Zur Bestimmung der Kationenaustauschkapazität wird das zu untersuchende Tonmaterial über einen Zeitraum von 2 Stunden bei 105°C getrocknet. Danach wird das getrocknete Tönmäterial mit einem Überschuss an wässriger 2N NH₄Cl-Lösung 1 Stunde unter Rückfluss zur Reaktion gebracht. Nach einer Standzeit von 16 Stunden bei Raumtemperatur wird filtriert, worauf der Filterkuchen gewaschen, getrocknet und vermahlen wird und der NH₄-Gehalt im Tonmaterial durch Stickstoffbestimmung (CHN-Analysator "Vario-EL III" der Firma Elementar in Hanau) nach den Herstellerangaben ermittelt. Der Anteil und die Art der ausgetauschten Metallionen wird im Filtrat durch ICP-Spektroskopie bestimmt.

### Bestimmung des Sedimentvolumens:

Ein graduierter 100 ml Messzylinder wird mit 100 ml destilliertem Wasser gefüllt. 2 g der zu vermessenden Substanz werden langsam und portionsweise, je etwa 0,1 bis 0,2 g mit einem Spatel auf die Oberfläche des Wassers gegeben. Nach dem Absinken einer zugegebenen Portion wird die nächste Portion zugegeben. Nachdem die 2 g Substanz zugegeben und auf den Grund des Messzylinders abgesunken sind, wird der Zylinder für eine Stunde bei Raumtemperatur stehen gelassen. Anschließend wird an der Graduierung des Messzylinders die Höhe des Sedimentsvolumens in ml/2g abgelesen. Für die Bestimmung des Sedimentvolumens nach 3-tägiger Lagerung in Wasser wird der Probenansatz mit Parafilm^{®} verschlossen und für 3 Tage bei Raumtemperatur erschütterungsfrei stehen gelassen. Danach wird an der Graduierung des Messzylinders das Sedimentvolumen abgelesen.

### Bestimmung des Montmorillonitgehalts über die Methylenblauadsorption

Der Methylenblauwert ist ein Maß für die innere Oberfläche der Tonmaterialien.

### a) Herstellung einer Tetranatriumdiphosphat-Losung

5,41 g Tetranatriumdiphosphat werden auf 0,001 g genau in einen 1000 ml Messkolben eingewogen und unter Schütteln bis zur Eichmarke mit dest. Wasser aufgefüllt.

### b) Herstellung einer 0,5 %-igen Methylenblaulösung

In einem 2000 ml Becherglas werden 125 g Methylenblau in ca. 1500 ml dest. Wasser gelöst. Die Lösung wird abdekantiert und auf 25 l mit dest. Wasser aufgefüllt.

0,5 g feuchter Testbentonit mit bekannter innerer Oberfläche werden in einem Erlenmeyerkolben auf 0,001 g genau eingewogen. Es werden 50 ml Tetranatriumdiphosphatlösung zugegeben und die Mischung 5 Minuten zum Sieden erhitzt. Nach dem Abkühlen auf Raumtemperatur werden 10 ml 0,5 molare H₂SO₄ zugegeben und 80 bis 95 % des zu erwartenden Endverbrauchs an Methylenblaulösung zugegeben. Mit dem Glasstab wird ein Tropfen der Suspension aufgenommen und auf ein Filterpapier gegeben. Es bildet sich ein blau-schwarzer Fleck mit einem farblosen Hof. Es wird nun in Portionen von 1 ml weitere Methylenblaulösung zugegeben und die Tüpfelprobe wiederholt. Die Zugabe erfolgt solange, bis sich der Hof leicht hellblau färbt, also die zugegebene Methylenblaumenge nicht mehr vom Testbentonit absorbiert wird.

### c) Prüfung von Tonmaterialien

Die Prüfung des Tonmaterials wird in der gleichen Weise durchgeführt wie für den Testbentonit. Aus der verbrauchen Menge an Methylenblaulösung lässt sich die innere Oberfläche des Tonmaterials berechnen.

381 mg Methylenblau/g Ton entsprechen nach diesem Verfahren einem Gehalt von 100 % Montmorillonit.

### Bestimmung des Trockensiebrückstandes

Etwa 50 g des zu untersuchenden lufttrockenen Tonmaterials werden auf einem Sieb der entsprechenden Maschenweite eingewogen. Das Sieb wird an einen Staubsauger angeschlossen, der über ein unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen gröberen Anteile durch Differenzwägung ermittelt.

### Bestimmung des Nasssiebrückstandes

Es wird zunächst eine 5 %-ige Suspension hergestellt, indem eine entsprechende Menge des zu untersuchenden Tonmaterials bei ca. 930 UpM ca. 5 Minuten in Wasser eingerührt wird. Die Suspension wird für weitere 15 Minuten bei ca. 1865 UpM gerührt und die Suspension dann durch ein Sieb der gewünschten Maschenweite gegossen. Der Rückstand wird so lange mit Leitungswasser - gewaschen, bis das Waschwasser klar abläuft. Das Sieb mit dem Rückstand wird dann für 5 Minuten in ein Ultraschallbad gesetzt, um restliche Feinanteile zu entfernen. Der verbliebene Rückstand wird kurz mit Leitungswasser gewaschen und die Ultraschallbehandlung ggf. wiederholt, bis während der Ultraschallbehandlung keine Feinstoffe mehr in das Wasser übertreten. Das Sieb wird dann bis zur Gewichtskonstanz getrocknet. Zum Auswiegen wird der auf dem Sieb verbliebene Rückstand ein eine gewogene Porzellanschale überführt.

### Bestimmung des Schüttgewichts

Ein bei der 1000 ml Markierung abgeschnittener Messzylinder wird gewogen. Dann wird die zu untersuchende Probe mittels eines Pulvertrichters so n einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

### Röntgendiffraktometrie (Smektit-Kieselgelmischphasen)

1 bis 2 g der Probe werden in einem Achatmörser von Hand gemahlen und dann durch ein Sieb mit einer Maschenweite von 20 µm gesiebt. Ggf. wurde der Mahlvorgang solange wiederholt, bis die gesamte Probe das Sieb passiert. Für die Messungen wurde ein Siemens D5000 Röntgendiffraktometer verwendet. Es wurden die folgenden Messbedingungen verwendet:

| | |
|---|---|
| Probenhalter | Kunststoff, "top loading", Ø = 25 mm |
| Dicke der Pulverschicht | 1 mm |
| Röntgenquelle | Cu Kα: 40 kV/40mA |
| Diffraktionswinkel | 2 - 80 ° (2 θ) |
| Messzeit | 3 Sekunden pro Schritt |
| Spalt | Primäre und sekundäre Divergenzblenden mit Schlitzweiten von 1 mm |

Die qualitative Auswertung der Diffraktogramme, d.h. die Zuordnung der mineralischen Phasen erfolgte mit Hilfe des kommerziell erhältlichen Programms "EVA" der Bruker AXS GmbH, Karlsruhe entsprechend der Veröffentlichung von Brindley und Brown (1980): "Crystal Structures of clay minerals and their X-ray identification"; Mineralogical Society No. 5, 495.

Die quantitative Auswertung erfolgte nach dem Rietveld-Verfahren unter Verwendung des Computerprogramms AutoQuan der Seifert GE Inspection Technologies GmbH, Ahrensburg, DE. Zur Bestimmung des Anteils der amorphen Phase wurde Zinkit als interner Standard verwendet. Für die Hintergrundkorrektur wurde ein Polynom vierten Grades in einem Winkelbereich von 4 bis 80 ° (2θ) verwendet.

### Röntgendiffraktometrie zur Bestimmung des Nebenmineralgehaltes der Vergleichsprobe (Calciumbentonit)

Die Röntgenaufnahmen für dieses Muster wurden an einem hochauflösenden Pulverdiffraktometer der Fa. Phillips (X'-Pert-MPD(PW 3040)) erstellt, das mit einer Cu-Anode ausgerüstet war. Der Nebenmineralgehalt des Schichtsilicats (z.B. Bentonit) wurde durch Vergleich mit Messungen aus einer Könzentrationsreihe mit nebenmineralfreiem Schichtsilicat, der mit dem entsprechenden Nebenmineral angereichert wurde, bestimmt. Hierzu wurden für die Minerale sog. NIST-Standards NIST (bezogen von National Institute of Standards and Technology, 100 Bureau Drive, Stop 2300, Gaithersburg, MD 20899-2300) eingesetzt. Für jedes Mineral wurde die Reflexintensität (-höhe) des intensivsten Reflexes als Funktion des Gehalts des jeweiligen Nebenminerals im Referenz-Material bestimmt. Aus diesen Daten kann nach Bestimmung der Höhe desselben Reflexes in der unbekannten Probe der Gehalt des entsprechenden Nebenminerals berechnet werden. Dieses Verfahren ist als halbquantitativ zu bewerten.

### Figuren und Beispiele

Das erfindungsgemäße Verfahren wird nachstehend anhand der beschriebenen Figuren und Beispiele näher beschrieben. Es soll hierbei betont werden, dass sowohl die Figuren wie auch die Beispiele lediglich veranschaulichenden Charakter besitzen und in keinster Weise den Rahmen der Erfindung beschränken.

Es zeigen:

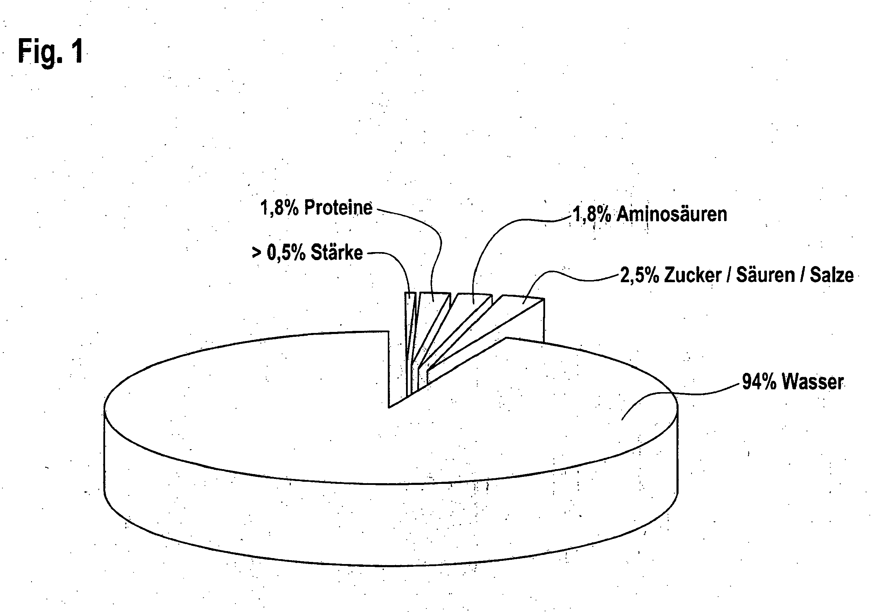

- Fig.1:: die prozentuale Zusammensetzung von industriellem Kartoffelfruchtwasser

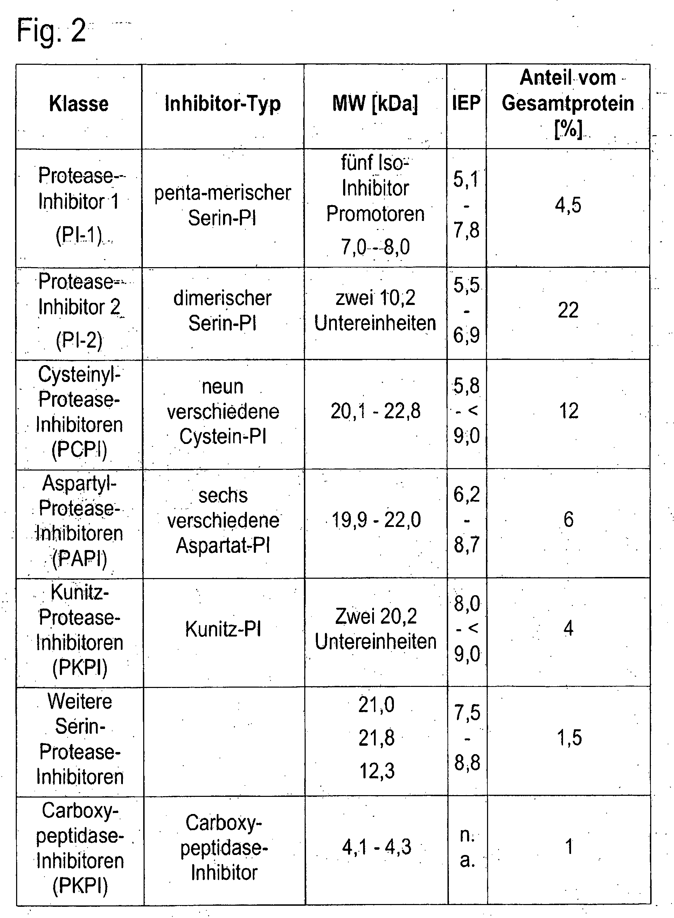

- Fig.2:: eine Übersicht über die in Kartoffelfruchtwasser enthaltenen Klassen von Protease-Inhibitoren

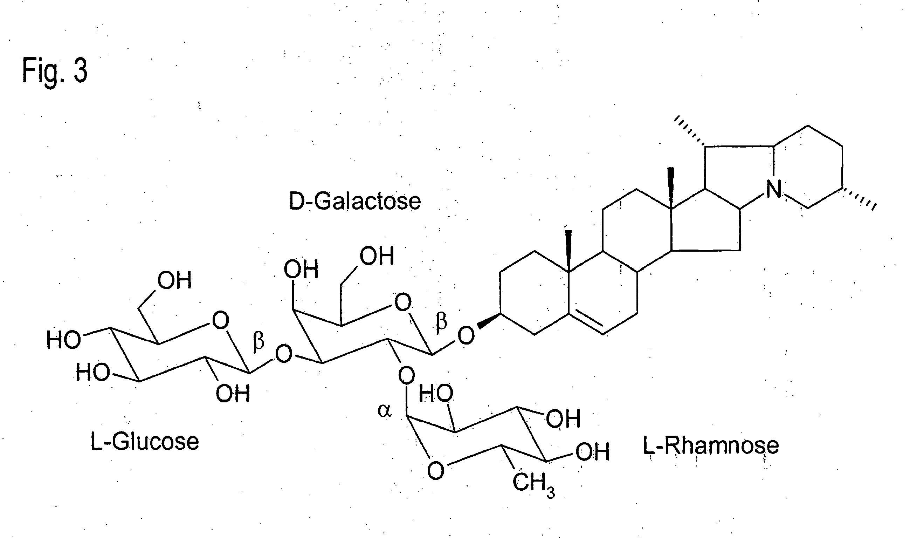

- Fig.3:: die Strukturformel von α-Solanin

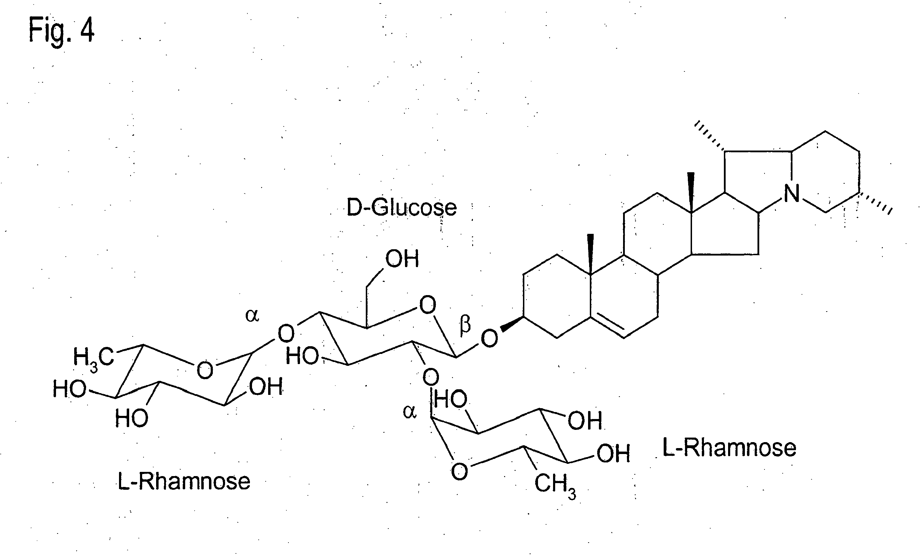

- Fig.4:: die Strukturformel von α-Chaconin
- Fig.5:: die Adsorption von Proteinen aus Kartoffelfruchtwasser an die getesteten Dreischichtminerale Adsorbens 1 (Kieselgel-Smektit-Mischphase), Adsorbens 2 (Bentonit 1), Adsorbens 4 (Saponit 1),Adsorbens 5 (Bleicherde 1), Adsorbens 6 (Bleicherde 2), Adsorbens 7 (Bleicherde 3) und Adsorbens 3 (Bentonit 2) (SDS Page)
- Fig.6:: die Glykoalkaloidgehalte in Kartoffelfruchtwasser und in den Überständen nach der Adsorption an die unterschiedlichen Dreischichtminerale. (Mittelwerte aus Doppelbestimmung)

### Charakterisierung der für die Trennprozesse in Kartoffelfrucht-wasser eingesetzten Tonminerale und Bleicherden, wie sie in den Beispielen eingesetzt werden:

Um die relevanten Eigenschaften von Tonmineralen für einen Einsatz zur Abtrennung von Solanin und zur Auftrennung der Proteinfraktionen im Kartoffelfruchtwasser zu bestimmen, wurden die folgenden Tonminerale und daraus hergestellten Bleicherden für die Trennprozesse eingesetzt:

Bei Adsorbens 1 handelt es sich um eine Mischphase aus einem Montmorillonit und einem natürlichen Kieselgel. Zur Bestimmung der Gehalte der einzelnen mineralischen Fraktionen wurde- für den Fall dieses Adsorbens eine Röntgendiffraktionsauswertung unter Verwendung der Rietveld-Analyse gemacht. Die Ergebnisse sind in der Tabelle 3 dargestellt. Die charakteristischen physikalischen Daten zu diesem Adsorbens sind in Tabelle 1 wiedergegeben: Der Anteil an amorphem Material beträgt 34 Gew.-%.

Bei Adsorbens 2 handelt es sich um einen natürlichen Natrium-Calcium-Bentonit mit hoher Kationenaustauschkapazität.

Bei Adsorbens 3 handelt es sich um einen Calciumbentonit mit mittlerer bis niedriger Kationenaustauschkapazität.

Bei Adsorbens 4 handelt es sich um einen natürlich vorkommenden Saponit in der Calciumform.

Bei Adsorbentien 5 und 6 handelt es sich um sauer aufgeschlossene Bentonite (Bleicherden), die durch ein Kochen von Montmorillonit mit Säure gewonnen wurden.

Bei Adsorbens 7 handelt es sich um eine- sog. SMBE (surface modified bleaching -earth). Diese wurde gewonnen durch eine Beaufschlagung von Adsorbens 1 mit 5 Gew.-% Schwefelsäure.

Die charakteristischen physikalischen Daten zu den Adsorbentien sind in Tabelle 1 aufgeführt. Tabelle 2 zeigt die chemischen Zusammensetzungen, Tabelle 4 die Gehalte an Nebenmineralen, bestimmt durch Röntgendiffraktion unter Verwendung von Vergleichsmessungen mit NIST-Standards (s. Methodenteil).

**Tabelle 1: physikalische Eigenschaften von Adsorbentien**

| Adsorbens | 1 | 2 | 3 | 4 | 5 | 6 | 7 |
|---|---|---|---|---|---|---|---|
| | Kieselgel-Smektit-Mischphase | Bentonit 1 | Bentonit 2 | Saponit 1 | Bleicherde 1 | Bleicherde 2 | Bleicherde 3 |
| | | | | | | | |
| Kationenaustausch-kapazität (meq/100 g) | 52 | 105 | 59 | 49 | 38 | 38 | 48 |
| Trockensiebrückstand auf 45 µm (%) | 49 | n.d. | n.d. | n.d. | 41 | 40 | 53 |
| Trockensiebrückstand auf 63 µm (%) | 35 | n.d. | max. 20 | n.d. | 31 | 29 | 41 |
| Nasssiebrückstand auf 25 µm (%) | n.d. | 0,2 | n.d. | n.d. | n.d. | n.d. | n.d. |
| Schüttgewicht (g/l) | 292 | 600 | 750 | 713 | 570 | 550 | 380 |
| Methylenblauadsorption (mg/g Probe) | 106 | 500 | 247 | n.d. | n.d. | n.d. | n.d. |
| Wassergehalt (%) | 8 | 12,2 | 9 ± 4 | 9±3 | ~ 10 | ~ 10 | ~ 10 |
| pH (10 Gew.-% in Wasser) | 7,9 | 10,0 | 8,6 | 8,5 | 2,2-3,9 | 2,2-4,8 | 2-4 |
| BET Oberfläche (m²/g) | 208.4 | 80 | 65 | 65 | 190 | 270 | 190 |
| Kumulatives Porenvolumen (BJH) für Porendurchmesser 1.7 - 300 nm (cm³/g) | 0,825 | 0,13 | 0,103 | 0,12 | n.d. | 0,41 | n.d. |
| Durchschnittlicher Porendurchmesser (BJH) (nm) | 16,4 | 9,9 | 9,6 | 6,1 | n.d. | 5,9 | n.d. |
| Sediment- bzw. Quellvolumen (ml/2g) | 5,5 | 15 | 6 | 5 | 3,0 | 2,0 | 4,0 |

Die Zusammensetzung der erfindungsgemäß verwendeten Adsorbentien 1 bis 3 sowie des als Vergleich eingesetzten Calciumbentonits ist in Tabelle 4 angegeben.

**Tabelle 2: Zusammensetzung der Adsorbentien**

| Adsorbens | 1 | 2 | 3 | 4 | 5 | 6 | 7 |
|---|---|---|---|---|---|---|---|
| | Kieselgel-Smektit-Mischphase | Bentonit 1 | Bentonit 2 | Saponit 1 | Bleicherde 1 | Bleicherde 2 | Bleicherde 3 |
| SiO₂ | 70.6 | 59,6 | 57,9 | 52 | 64 | 66,8 | 70,2 |
| Fe₂O₃ | 2.8 | 3,6 | 4,9 | 1,9 | 4,3 | 3,7 | 2,8 |
| Al₂O₃ | 9.8 | 17,2 | 18,3 | 6,6 | 15,2 | 14,2 | 9,4 |
| MgO | 4.1 | 6,7 | 3,4 | 26 | 2,8 | 2,3 | 2,5 |
| CaO | 1.4 | 2,4 | 3,1 | 1,1 | 1,4 | 1,1 | 2,3 |
| K₂O | 1.5 | 0,51 | 1,8 | 1,4 | 2,9 | 2,2 | 1,5 |
| Na₂O | 0.26 | 1,7 | 0,7 | 0,32 | 1 | 0,8 | 0,4 |
| TiO₂ | 0.25 | 0,27 | -- | 0,25 | -- | -- | 0,3 |
| SO₃ | -- | -- | -- | -- | -- | -- | -- |
| GV (1000°C) | 7.9 | 7 | 8,9 | 9,5 | 7,6 | 8 | 9,5 |

Weiter wurden die erfindungsgemäß verwendeten Adsorbentien 1 und 2 durch Röntgendiffraktometrie in ihrer mineralischen Zusammensetzung genauer untersucht. Die Auswertung erfolgte wie oben beschrieben. Die mineralische Zusammensetzung der Adsorbentien 1 und 2 sowie des als Vergleich herangezogenen Calciumbentonits ist in Tabelle 5a und 5b zusammengefasst.

**Tab.elle 3: mineralische Zusammensetzung von Adsorbens 1, ermittelt durch Auswertung von Röntgendiffraktogrammen unter Verwendung der Rietveld-Analyse**

| Mineralische Phase | Adsorbens 1 (Kieselgel-Smektit-Mischphase) |
|---|---|
| Smektit (Gew.-%) | 40 |
| Illit / Muscovit (Gew.-%) | Spuren |
| Kaolinit (Gew.-%) | n.b. |
| Sepiolith (Gew. -%) | 11 |
| Quarz (Gew.-%) | Spuren |
| Orthoclas (Gew.-%) | 12 |
| Plagioclas (verschieden) (Gew.-%) | 3 |
| Calcit (Gew.-%) | Spuren |
| Amorphes Material (Gew.-%) | 34 |

In der folgenden Tabelle 5b sind die Nebenmineralgehalte bestimmt aus Röntgenmessungen aufgeführt(siehe Methodenbeschreibung):

**Tabelle 4: mineralische Zusammensetzung des als Vergleich verwendeten (soweit vorhanden, ohne Adsorbens 1).**

| Mineralische Phase | Adsorbens 2 (Bentonit 1) | Adsorbens 3 (Bentonit 2) | Adsorbens (Saponit 1) | Adsorbens 5 (Bleicherde 1) | Adsorbens 6 (Bleicherde 2) | Adsorbens 7 (Bleicherde 3) |
|---|---|---|---|---|---|---|
| Kaolinit (Gew.-%) | - | 1 - 2 | - | - | - | - |
| Quarz (Gew.-%) | 0, 5 | 6 - 9 | 2 - 3 | 8 | 6 - 7 | 1 - 2 |
| Feldspat (Gew.-%) | - | 1 - 4 | 2 - 3 | 2 - 3 | 2 | 2 |
| Glimmer (Gew.-%) | - | 1 - 6 | - | 2 - 3 | 2 - 3 | 1 - 2 |
| Calcit (Gew.-%) | < 1 | - | 0,5 - 1 | - | - | - |
| Andere Minerale (Gew.-%) | - | 5 - 10 | - | - | - | - |

### Beispiel 1

### Adsorption von Kartoffelproteinen an unterschiedlichen Dreischichtmineralen

Die Adsorption von Kartoffelfruchtwassser wurde in Abhängigkeit vom pH-Wert an die Materialien Adsorbens 1 (Kieselgel-Smektit-Mischphase), Adsorbens 2 (Bentonit 1), Absorbens 4 (Saponit 1), Adsorbens 7 (Bleicherde 3) und Adsorbens 3 (Bentonit 2) untersucht.

### Durchführung:

- 100 mg Adsorbens
- 2,5 mL verdünntes, gepuffertes Kartöffelfruchtwasser (2400 µL 50 mM Puffer + 100µL Kartoffelfruchtwasser)
- Puffer: Acetat (pH 4 und pH 5), MES (pH 6), HEPES (pH 7), Tris (pH 8 und pH 9)
- 2 Stunden im Überkopfmischer inkubieren
- Material abzentrifugieren, Überstände: SDS-PAGE (10 %ige Gele, Silberfärbung)

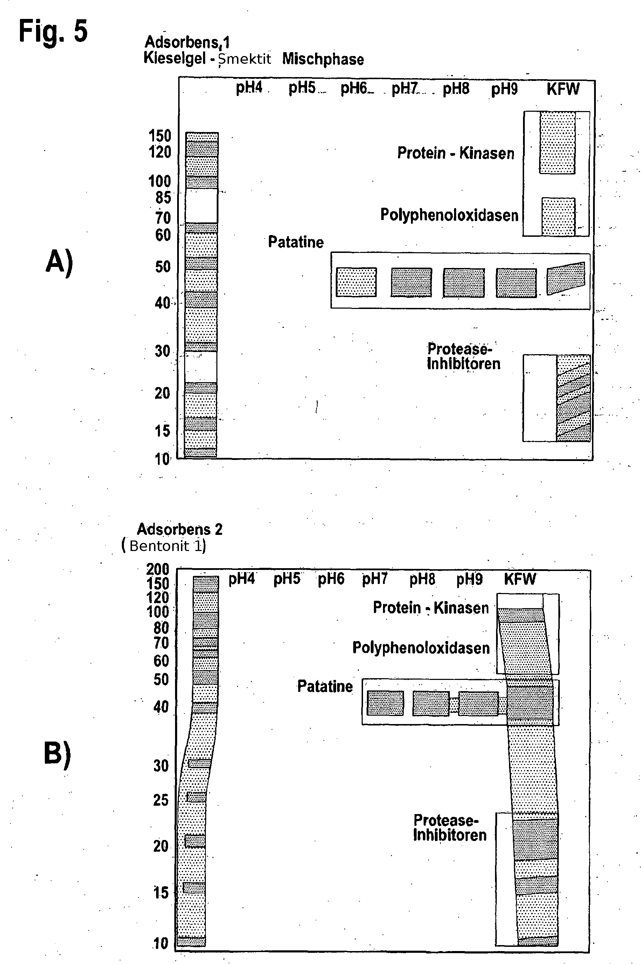

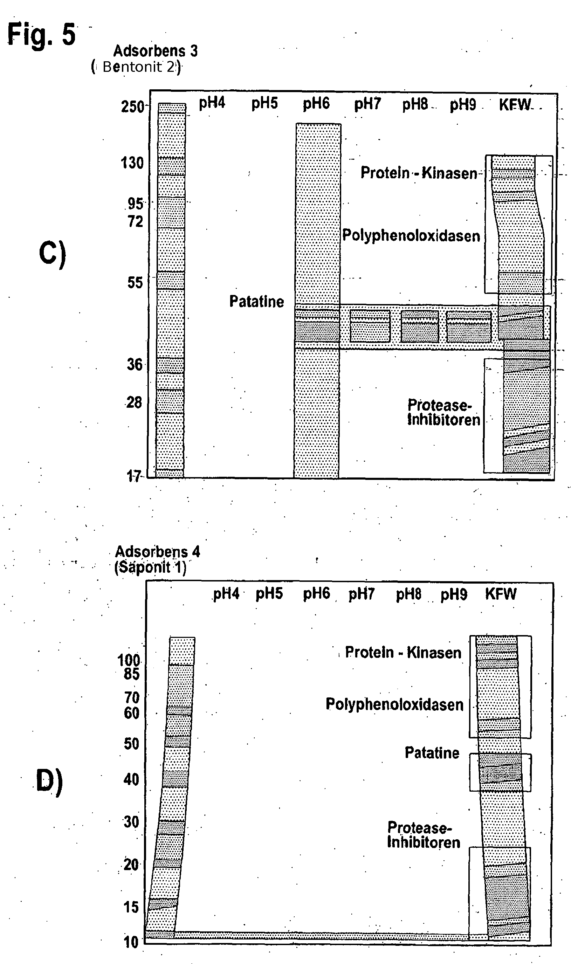

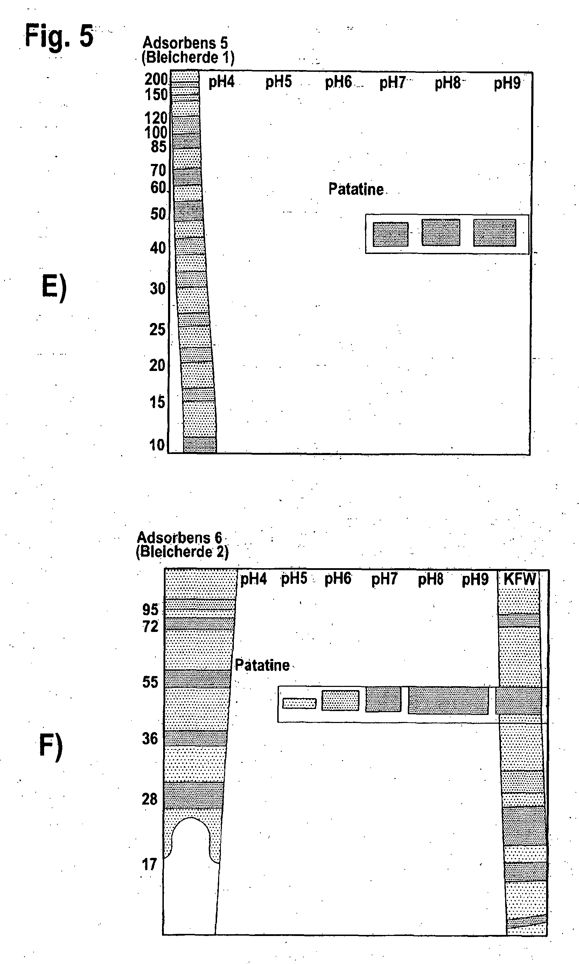

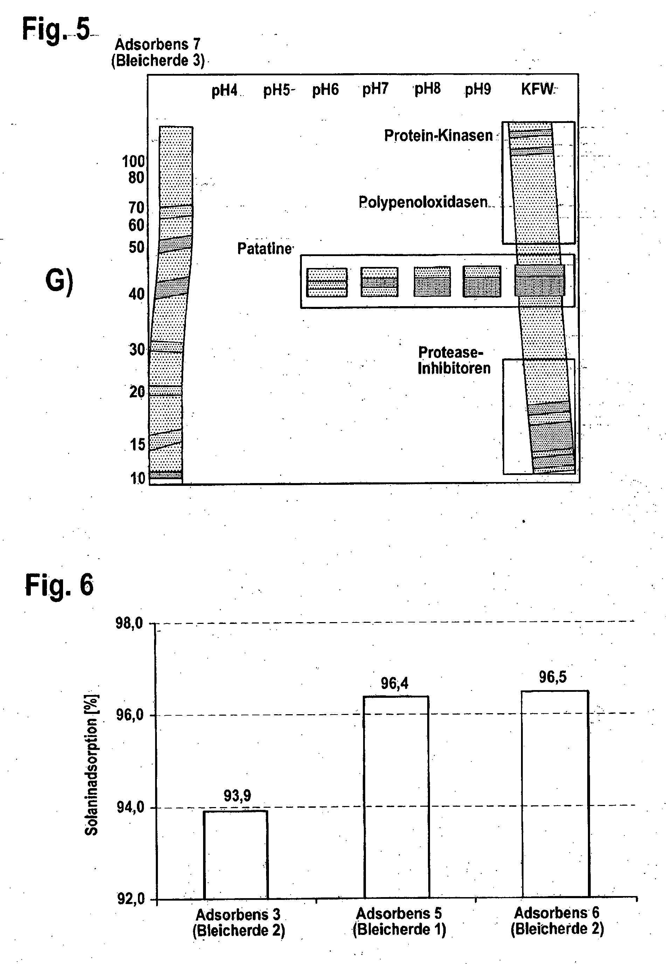

Die Gele sind in Fig. 5 dargestellt.

Bei pH 4 und 5 werden alle von diesen Adsorbentien im Kartoffelfruchtwasser enthaltenen Proteine adsorbiert. Bei pH 7-9 findet eine selektive Adsorption der Protease-Inhibitoren statt, (pH 6: vollständige Adsorption der Protease-Inhibitoren, teilweise Adsorption der Patatine.)wenn als Adsorbentien Bentonite, Bleicherden oder Smektit-Kieselgel-Mischphasen eingesetzt werden. Der Saponit adsorbiert unter allen eingesetzten Bedingungen/pH Werten alle Proteinfraktionen und ist deshalb für deren Auftrennung bzw. eine Abreicherung der minoren Kartoffelproteine und Polyphenoloxidasen nicht geeignet. Dies ist wahrscheinlich durch seine niedrige Kationenaustauschkapazität verursacht.

### Beispiel 2

### Abreicherung von Glykoalkaloiden aus Kartoffelfruchtwasser

Verdünntes Kartoffelfruchtwasser (5 mL + 5 mL Puffer) wurde bei pH 8" (100 mM Tris) an die Materialien Adsorbens 3 (Bentonit 2), Adsorbens 5 (Bleicherde 1) sowie Adsorbens 6 (Bleicherde 2) adsorbiert. Es wurden 5 g des entsprechenden Materials verwendet.

Nach erfolgter Inkubation der Materialien mit dem Kartoffeifruchtwasser und Abzentrifugation des Adsorbens wurde im Überstand nach essigsaurer Extraktion und Festphasenextraktion mittels HPLC-Analytik der Glykoalkaloidgehalt bestimmt.

Es konnte bei allen drei Adsorbentien ein Abreicherungseffekt von über 90 % festgestellt werden:
Adsorbens 3 (Bentonit 2): 93,9 %
Adsorbens 5 (Bleicherde 1): 96,4 %
Bentonit sauer aktiviert CEC [Adsorbens 6 (Bleicherde 2)]: 96,5 %

Die Ergebnisse sind auch in Fig. 5 dargestellt.

## Patentansprüche

1. Verfahren zum Auftrennen von Pflanzenproteinen umfassend den Schrott.
a) In-Kontak-Bringen einer Proteinlösung mit einem Dreischichtmineral, ausgewählt aus der Gruppe bestehend aus natürlichen oder künstlich hergestellten Dreischichtmineralen, die sauer oder alkalisch vorbehandelt sein können und/oder einen Anteil an Kieselgel enthalten, wobei das Dreischichtmineral eine Kationenaustauscherkapazität von mindestens 50 meq/ 100g Dreischichtmineral besitzt.

2. Verfahren nach Anspruch 1, wobei das Dreischichtmineral ausgewählt ist aus der Gruppe bestehend aus smektitischen und nicht-smektitischen Schichtsilikaten sowie Mischungen davon.

3. Verfahren nach Anspruch 2, wobei die smektitischen Schichtsilikate ausgewählt sind aus der Gruppe bestehend aus Bentoniten, Beideliten, Sapöniten, Montmorilloniten, Hektoriten und Stevensiten und die nicht-smektitis.chen Schichtsilikate ausgewählt sind aus der Gruppe bestehend aus Vermiculiten.

4. Verfahren nach einem der vorhergehenden Ansprüche, wobei die Dreischichtminerale zudem ein oder mehrere amorphe Phase(n) und ein oder mehrere Nebenmineralien umfassen, ausgewählt aus der Gruppe bestehend aus Quarz, Cristobalit, Feldspat, Calcit, Dolomit und deren Mischungen.

5. Verfahren nach einem der vorhergehenden Ansprüche, wobei die Proteinlösung einen pH Wert von 5,0 bis 9,0 besitzt.

6. Verfahren nach einem der vorhergehenden Ansprüche, wobei das Dreischichtmineral eine mittlere Teilchengröße von 1µm bis 1,5 mm besitzt.

7. Verfahren nach einem der vorhergehenden Ansprüche, wobei es sich bei der Pflanzenproteinlösung um Pflanzenfruchtwasser handelt.

8. Verfahren nach Anspruch 7, wobei es sich bei dem Pflanzenfruchtwasser um Kartoffelfruchtwasser handelt.

9. Verfahren nach einem der vorhergehenden Ansprüche, weiter umfassend die Schritte
b) Trennen der gemäß Schritt a) In-Kontakt-gebrachten Proteinlösung und des Dreischichtminerals;
c) In-Kontakt-Bringen des Dreischichtminerals von Schritt b) mit einer Pufferlösung oder Hochsalzpufferlösung.

## Claims

1. Method for separating plant proteins, which comprises the step
a) contacting a protein solution with a 2:1 type clay, selected from the group consisting of natural or artificially produced 2:1 type clays, which can be acid- or alkali- pre-treated and/or have a fraction of silica gel, wherein the 2:1 type clay has a cation-exchange capacity of at least 50 meq/100g of 2:1 type clay.

2. Method according to Claim 1, wherein the 2:1 type clay is selected from the group consisting of smectitic and non-smectitic phyllosilicates and also mixtures thereof.

3. Method according to Claim 2, wherein the smectitic phyllosilicates are selected from the group consisting of bentonites, beidelites, saponites, montmorillonites, hectorites and stevensites and the non-smectitic phyllosilicates are selected from the group consisting of vermiculites.

4. Method according to any one of the preceding claims, wherein the 2:1 type clays in addition comprise one or more amorphous phase (s) and one or more minor minerals selected from the group consisting of quartz, cristobalite, feldspar, calcite, dolomite and mixtures thereof.

5. Method according to any one of the preceding claims, wherein the protein solution has a pH from 5.0 to 9.0.

6. Method according to any one of the preceding claims, wherein the 2:1 type clay has a median particle size from 1 µm to 1.5 mm.

7. Method according to any one of the preceding claims, wherein the plant protein solution is a plant juice.

8. Method according to Claim 7, wherein the plant juice is potato juice.

9. Method according to any one of the preceding claims, which further comprises the steps
b) separating the protein solution and the 2:1 type clay contacted according to step a);
c) contacting the 2:1 type clay of step b) with a buffer solution or high-salt buffer solution.

## Revendications

1. Procédé pour séparer des protéines végétales, comprenant l'étape de
a) mise en contact d'une solution de protéines avec un minéral tricouche, choisi dans le groupe consistant en les minéraux tricouches naturels ou artificiels, qui peuvent avoir subi un traitement préalable acide ou alcalin et/ou contiennent une certaine proportion de gel de silice, le minéral tricouche présentant une capacité d'échange de cations d'au moins 50 méq/100 g de minéral tricouche.

2. Procédé selon la revendication 1, **caractérisé en ce que** le minéral tricouche est choisi dans le groupe consistant en les phyllosilicates smectitiques et non smectitiques, ainsi que les mélanges de ceux-ci.

3. Procédé selon la revendication 2, dans lequel les phyllosilicates smectitiques sont choisis dans le groupe consistant en les bentonites, les beidélites, les saponites, les montmorillonites, les hectorites et les stévensites, et les phyllosilicates non smectitiques sont choisis dans le groupe consistant en les vermiculites.

4. Procédé selon l'une des revendications précédentes, dans lequel les minéraux tricouches comprennent en outre une ou plusieurs phase (s) amorphe (s), et un ou plusieurs minéraux accessoires, choisis dans le groupe consistant en le quartz, la cristobalite, le feldspath, la calcite, la dolomite et les mélanges de ceux-ci.

5. Procédé selon l'une des revendications précédentes, dans lequel la solution de protéines a un pH de 5,0 à 9,0.

6. Procédé selon l'une des revendications précédentes, dans lequel le minéral tricouche a une granulométrie moyenne de 1 µm à 1,5 mm.

7. Procédé selon l'une des revendications précédentes, dans lequel, pour ce qui concerne la solution de protéines végétales, il s'agit d'eau de végétation de plantes.

8. Procédé selon la revendication 7, dans lequel, pour ce qui concerne l'eau de végétation de plantes, il s'agit d'eau de végétation de pommes de terre.

9. Procédé selon l'une des revendications précédentes, comprenant en outre les étapes de :
b) séparation de la solution de protéines mises en contact selon l'étape a) et du minéral tricouche ;
c) mise en contact du minéral tricouche de l'étape b) avec une solution tampon ou une solution tampon à haute teneur en sel.
